# EUROPÄISCHE PATENTSCHRIFT

(11) **EP 0 733 994 B1**
(45) Veröffentlichungstag und Bekanntmachung des Hinweises auf die Patenterteilung: **24.01.2007**
(21) Anmeldenummer: 96103844.5
(22) Anmeldetag: 12.03.1996
(51) Int. Cl.: G06K 19/077

(54) **Verfahren zum Herstellen von Chipkarten**
Manufacturing method for chip cards
Méthode de fabrication de cartes à puce

(30) Priorität: 19.03.1995 DE 19509233
(43) Veröffentlichungstag der Anmeldung: 25.09.1996
(73) Patentinhaber: MELZER MASCHINENBAU GmbH, D-58332 Schwelm (DE)
(72) Erfinder: Melzer, Rainer, 58332 Schwelm (DE); Melzer, Roland, 58332 Schwelm (DE)
(74) Vertreter: Sparing, Rolf Klaus

(56) Entgegenhaltungen:
- EP-A- 0 587 011
- EP-A- 0 615 285
- WO-A-94/22111
- DE-A- 3 924 439
- US-A- 4 897 534

## Beschreibung

Die Erfindung betrifft ein Verfahren zum Herstellen von Elektronik-Komponenten enthaltenden Kunststoffkarten.

Ein bekanntes Verfahren zum Herstellen von Kunststoffkarten geht von quasi endlosen Bahnen aus, die taktweise durch eine Laminieranlage bewegt werden, in der mindestens zwei solcher Bahnen unter Druck und Wärmezufuhr miteinander verbunden werden; die Bahnen sind dabei mit Lochungen in Reihen parallel zu der Bahnvorschubrichtung versehen, deren Abstände sehr genau gleichbleibend sind und damit die Registerhaltigkeit der verschiedenen Bahnen gewährleisten, indem sie mit Positionierdornen oder -stiften der Laminieranlage zusammenwirken.VDieses Verfahren bildet den Gegenstand der Europäischen Patentschrift 0 134 820.

Im Ausführungsbeispiel liegen auf den Streifen zwei Druckbilder nebeneinander, und in dem dazwischenliegenden mittleren Bereich befinden sich die Lochungen.

Seit einigen Jahren finden sogenannte Chipkarten immer weitere Verbreitung. Bei ihnen ist ein Elektronik-Modul in eine Ausnehmung der Karte eingefügt, beispielsweise ein Speichermodul, dessen abgespeicherte Daten eine bestimmte Geldsumme repräsentieren, wie bei den bekannten Telefonkarten. Der elektrische Zugang zu dem Modul erfolgt dabei über mit dem Chip verbundene Kontaktfelder, die (möglichst) bündig in der Kartenoberfläche liegen und für Gegenkontakte beispielweise eines Lesegeräts zugänglich sind.

In jüngster Zeit wurden Chipkarten entwickelt, deren Elektronik-Komponenten zusätzlich eine Antennenspule umfassen. Der Chip kann deshalb drahtlos über die Spule und entsprechende Verarbeitungsschaltkreise adressiert werden. Das Dokument WO 94/22111 offenbart eine solche Karte.

Schließlich gibt es auch noch Chipkarten, bei denen die Spule mit einem Elektronikmodul verbunden ist, auf den außerdem über Kontaktfelder in der Kartenoberfläche zugegriffen werden kann. Beispielsweise kann eine solche Karte eine sogenannte "elektronische Börse" darstellen, in deren Speicher über die Kontaktfelder ein vorausbezahlter oder -kreditierter Geldbetrag "geladen" wird, während das "Entladen" drahtlos über die Antennenspule erfolgt.

Wenn man mittels des eingangs geschilderten Verfahrens derartige Chipkarten fertigt, werden in die fertiglaminierte Bahn Ausnehmungen eingebracht, beispielsweise eingefräst, in die dann die Elektronik-Komponenten eingefügt werden, im allgemeinen mittels eines Klebers. Dies ist ein Arbeitsgang, bei dem die Gefahr der Beschädigung der Elektronik-Komponenten, insbesondere der Antennenspule, groß ist. Da aber die Kosten der Elektronik-Komponenten mindestens 80% der Wertschöpfung einer Karte ausmachen, führt bei diesem Arbeitsgang entstehender Ausschuß zu überproportional hohen Verlusten.

Man könnte daran denken, wenigstens die Antennenspule vor dem Laminieren auf eine der Bahnen aufzubringen, beispielsweise registerhaltig aufzukleben oder aufzudrucken. Diese Bahn weist dann eine unregelmäßige Dicke auf. Zwar wird beim Laminieren dieser Dickenunterschied ausgeglichen, wobei die Elektronik-Komponenten von dem beim Laminieren fließfähigen Material umflossen werden. Da aber wenigstens eine der Bahnen regelmäßig mit einem Druckbild versehen ist, würde das volumenausgleichende Verfließen einer solchen Bahn zu Deformationen des Druckbilds führen.

Das gilt auch bei dem Verfahren nach DE-A-43 37 921, bei dem versucht wird, einen Chipmodul und eine auf eine Trägerfolie aufgebrachte Antennenspule möglichst in der Mitte der Kartendicke zu plazieren.

WO 91/01533 lehrt, einen in eine Karte einzufügenden Chip mit einem biegefesten Ring zu umschließen und den Hohlraum zwischen Ring und Chip auszugießen.

Aus DE-A-36 39 630 ist es bekannt, bei der Chipkartenherstellung eingesetzte Folien mit Randperforationen für den genauen Transport zu versehen.

Aufgabe der Erfindung ist es, ein Verfahren zum Herstellen von Elektronik-Komponenten enthaltenden Kunststoffkarten zu schaffen, das einfach, sicher und automatisierbar ist, mit geringem Personaleinsatz ausführbar ist und bei dem man mit quasi-endlosen Bahnen arbeiten kann.

Erfindungemäß wird diese Aufgabe durch die Verfahrensschritte des Anspruchs 1 gelöst.

Diese Vorgehensweise ermöglicht eine ganze Reihe vor Vorteilen:

Da auf die Kernbahn erst in einem weiteren Arbeitsgang die im allgemeinen ein Druckbild tragende Deckbahn aufgebracht wird, stört es nicht, daß beim Herstellen der Kernbahn das Material volumenausgleichend verfließt. Bei bestimmten Kartentypen kann somit der Arbeitsgang des Fräsens von Hohlräumen in die fertige Karte, um dann die Elektronik-Komponenten einzufügen, vollständig entfallen.

Dabei ist es möglich, die Herstellung der Kernbahn und die Herstellung der Chipkarten unter Verwendung dieser Kernbahn räumlich zu trennen. Es ist nämlich sinnvoll, die Elektronik-Komponenten, mit denen die Trägerbahn bestückt wird, direkt beim Lieferanten auf die Trägerbahn aufzubringen, wobei die Registerhaltigkeit dank den Registrier-Mitteln erhalten bleibt. Es kann deshalb die Konfektionierung dieser Komponenten für die Zulieferung entfallen. Ebenso sinnvoll ist es weiter, bei einem solchen Lieferanten nicht nur die Trägerbahn zu bestücken, sondern die gesamte Kernbahn zu fertigen, so daß die auf die Trägerbahn aufgebrachten Komponenten geschützt sind und die Kernbahn, beispielsweise auf Bobinen gewickelt, angeliefert wird. Beides verringert die Ausschußrate. Alternativ kann aber auch die mit den Komponenten bestückte Trägerbahn allein, die dann als Konfektionierung dient, zugeliefert werden.

Da die Kernbahn die Elektronik-Komponenten umschließt, kommt das unterschiedliche Wärmespeichervermögen des Kunststoffs einerseits, der eingebetteten Komponenten andererseits beim Auflaminieren der Deckbahn weniger stark zum Tragen, so daß dieser Laminiervorgang weniger kritisch ist. Auch dies verringert die Ausschußrate.

Die bei dem eingangs genannten bekannten Verfahren verwendeten Registrierlochungen ermöglichen sehr hohe Positioniergenauigkeiten und werden deshalb mit Vorteil auch bei dem Verfahren gemäß der Erfindung angewandt.

Die Komponenten, mit denen die Trägerbahn zu bestücken ist, werden vorzugsweise an diese angeheftet, beispielsweise mittels eines Schmelzklebers angeklebt. Man kann aber auch, wenn es sich bei diesen Komponenten um Antennenspulen handelt, diese unmittelbar auf die Trägerbahn aufdrucken oder galvanisch aufbringen. Bei Verwendung eines Schmelzklebers wird man einen Typ verwenden, der bei einer niedrigeren Temperatur aktiviert wird, dann aber bei den -- höheren -- Laminiertemperaturen fest bleibt.

Als Abdeckmaterial wird vorzugsweise ein solches gewählt, das die Elektronik-Komponenten umfließt. Dabei kann es sich um einen Kunststoff handeln, vorzugsweiswe -- aber nicht zwingend -- denselben, aus dem auch die Trägerbahn besteht, und ebenfalls als quasi-endlose Bahn mit Registrier-mitteln konfektioniert.

In einer Variante wird bahnförmiges Abdeckmaterial registerhaltig auf die Trägerbahn geführt und auf diese aufgeklebt, wobei der Kleber dann den Volumenausgleich vornimmt.

Bei einer weiteren Variante wird eine Abdeckbahn mit Durchbrüchen versehen, die den Elektronik-Komponenten auf der Trägerbahn Platz bieten; in einem weiteren Verfahrensschritt wird dann Füllmaterial in den Durchbruch eingebracht und eingeebnet. Bei dem Füllmaterial kann es sich um einen Kleber handeln, wie er bisher für die Montage von Chip-Modulen in ausgefrästen Ausnehmungen verwendet wird.

Das Verfahren gemäß der Erfindung wird in unterschiedlichen Abläufen durchgeführt, je nachdem, welcher Kartentyp herzustellen ist:
a) Wenn es sich um Karten handelt, deren Chip nur drahtlos über eine Antennenspule adressierbar sein muß, ist es bevorzugt, sowohl die Spule als auch den Chip auf die Trägerbahn zu heften, die elektrischen Verbindungen zwischen Spule und Chip vor oder nach dem Aufheften herzustellen und beide mit der Abdeckung zu versehen. Der Chip braucht dabei nicht zu einem Modul verarbeitet zu werden, so daß seine Abmessungen nicht ins Gewicht fallen.
b) Wenn es sich um Karten handelt, deren Chip sowohl drahtlos über eine Antennenspule als auch über Kontaktfelder adressierbar sein muß, geht man zweckmäßigerweise so vor, daß nur die Spule auf die Trägerbahn aufgebracht wird, die Karten dann einschließlich Aufbringen der Deckschicht fertiggestellt werden, in herkömmlicher Weise eine Ausnehmung in die Karte gefräst wird, wobei die Spulenanschlüsse freigelegt werden, der Elektronik-Modul eingesetzt, mit der Spule verbunden und verklebt wird.

Die beigefügten Zeichnungen stellen schematisch und nicht maßstabsgetreu zwei Varianten von Karten dar, hergestellt mit dem Verfahren gemäß der Erfindung. Dabei ist der Deutlichkeit halber die Dickenabmessung der Karte stark übertrieben gezeichnet.
Fig. 1 zeigt perspektivisch, teilweise weggebrochen und geschnitten, eine erste Variante, und
Fig. 2 zeigt im Querschnitt und gegenüber Fig. 1 stark vergrößert einen Ausschnitt aus der Kernbahn bei einer zweiten Variante.

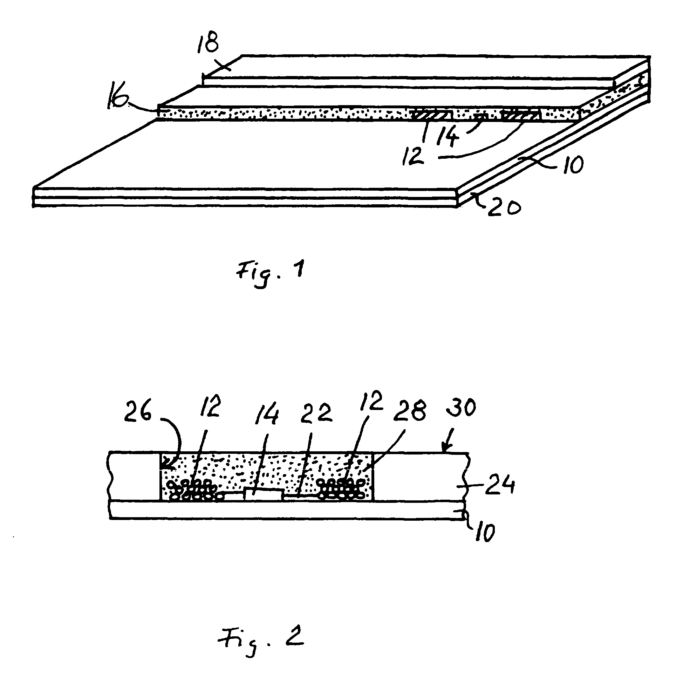

Man erkennt in Fig. 1 den schichtweisen Aufbau der Karte. An der Trägerbahn 10 sind eine Antennenspule 12 und ein mit dieser verbundener Elektronik-Chip 14 angeheftet worden. Danach ist die gesamte Oberseite der Bahn 10 mit einer Schicht 16 aus einem thermoplastischen Kunststoff, beispielsweise Polyvinylchlorid, abgedeckt worden, die beim Auflaminieren auf die Trägerbahn die Komponenten 12 und 14 umflossen hat. Die Bahnen 10 und 16 bilden die Kernbahn. Danach sind eine obere Deckbahn 18 und eine untere Deckbahn 20 auflaminiert worden. Die Deckbahnen können ihrerseits zum Schutz ihrer Bedruckung noch mit einer gleichzeitig auflaminierten Schutzbahn (nicht dargestellt) versehen worden sein.

Gemäß Fig. 2 sind eine Antennenspule 12 und ein Chip 14, mit der Spule über Zuleitungen 22 verbunden, auf der Trägerbahn 10 aufgeheftet worden. Danach wurde registerhaltig eine Abdeckbahn 24 auf die Trägerbahn 10 auflaminiert, wobei die Trägerbahn in Ausfluchtung mit den Elektronik-Komponenten 12, 14 einen Durchbruch 26 aufweist. In diesen ist dann in einem weiteren Arbeitsgang eine Füllmasse 28 eingebracht und bezüglich der Oberseite 30 der Abdeckbahn eingeebnet worden. Auf die so hergestellte Kernbahn können dann, wie zuvor, die Deckbahnen auflaminiert werden.

## Patentansprüche

1. Verfahren zum Herstellen von Elektronik-Komponenten enthaltenden Kunststoffkarten, mit den Schritten
Bestücken einer Trägerbahn (10) auf einer ersten Seite mit mindestens einem Teil der Elektronik-Komponenten (12, 14) entsprechend einem Register, und
Herstellen einer im Bereich der Kunststoffkarten beidseits planen Kernbahn mit eingeschlossenen Elektronikkomponenten durch Aufbringen von Abdeckmaterial (16; 24, 28) auf die erste Seite der Trägerbahn (10),
**dadurch gekennzeichnet,**
**daß** auf die hergestellte Kernbahn mindestens einseitig eine plane Deckbahn (18; 20) aufgebracht wird, und
**daß** in der Trägerbahn (10) außerhalb des Bereichs der Kunststoffkarten Registrier-Mittel zum registerhaltigen Aufbringen wenigstens der Deckbahn (10; 20) vorgesehen sind.

2. Verfahren nach Anspruch 1, bei dem die Registriermittel Lochungen gleichen Abstands in Reihen parallel zu der Bahnlänge umfassen.

3. Verfahren nach Anspruch 1 oder 2, bei dem die Elektronik-Komponenten (12, 14) an die Trägerbahn (10) angeheftet werden.

4. Verfahren nach Anspruch 3, bei dem die Elektronik-Komponenten (12, 14) auf die Trägerbahn (10) geklebt werden.

5. Verfahren nach einem der Ansprüche 1 bis 4, bei dem das Abdeckmaterial (16; 28) die Elektronik-Komponenten (12, 14) umfließt.

6. Verfahren nach einem der Ansprüche 1 bis 5, bei dem das Abdeckmaterial (16; 24) ein Kunststoff ist, der in Bahnform zugeführt und registerhaltig auf die Trägerbahn (10) auflaminiert wird.

7. Verfahren nach einem der Ansprüche 1 bis 5, bei dem eine registerhaltige Abdeckbahn (24) mit Durchbrüchen (26) im Bereich der Elektronik-Komponenten (12, 14) auf die Trägerbahn (10) auflaminiert oder -geklebt wird und die Ausschnitte mit einem Füllmaterial (28) eingeebnet werden.

8. Verfahren nach einem der vorangehenden Ansprüche, bei dem die Deckbahn (18; 20) bedruckt ist.

9. Verfahren nach einem der vorangehenden Ansprüche, bei dem die Deckbahn (18; 20) auf die Kernbahn auflaminiert wird.

10. Verfahren nach einem der vorangehenden Ansprüche, bei dem auf beide Seiten der Kernbahn Deckbahnen (18, 20) auflaminiert werden.

11. Verfahren nach einem der vorangehenden Ansprüche, bei dem das Abdeckmaterial (16; 24) bei einer ersten Temperatur auf die Trägerbahn (10) laminiert wird und die Deckbahn (18; 20) bei einer zweiten, gleichen oder abweichenden Temperatur auf die Kernbahn laminiert wird.

12. Verfahren nach einem der vorangehenden Ansprüche, bei dem die in der Kernbahn liegenden Elektronik-Komponenten eine Antennenspule (12) umfassen.

13. Verfahren nach Anspruch 12, bei dem die Elektronik-Komponenten einen mit der Antennenspule (12) verbundenen Halbleiterchip (14) umfassen.

14. Verfahren nach Anspruch 13, bei dem die Verbindung zwischen Spule (12) und Chip (14) auf der Trägerbahn (10) vorgenommen wird.

15. Verfahren nach Anspruch 12, bei dem nach dem Aufbringen der Deckbahn eine Öffnung zum Freilegen der Spulenanschlüsse in die Karte eingebracht wird und die Spulenanschlüsse mit einem in die Öffnung eingesetzten Halbleiter-Modul verbunden werden.

16. Verfahren nach Anspruch 12, soweit auf einen der Ansprüche 1 bis 3 rückbezogen, bei dem die Antennenspule (12) auf die Trägerbahn (10) aufgedruckt wird.

17. Verfahren nach Anspruch 12, soweit auf einen der Ansprüche 1 bis 3 rückbezogen, bei dem die Antennenspule (12) auf die Trägerbahn (10) galvanisch aufgebracht wird.

18. Verfahren nach Anspruch 12, bei dem eine aus Draht gewickelte Antennenspule (12) auf die Trägerbahn (10) aufgebracht wird.

## Claims

1. A method for manufacturing plastic cards comprising electronic components, comprising the steps
equipping a support web (10) on a first side with at least a part of the electronic components (12, 14) according to a register, and
manufacturing a kern web with included electronic components that is planar on both sides in the region of the plastic card by applying a covering material (16; 24, 28) on the first side of the support web (10),
**characterised in**
**that** a planar covering web (18; 20) is applied onto at least one side of the manufactured kern web, and
**that** register means are provided in the support web (10) outside the region of the plastic cards for applying at least the covering web (18; 20) in accordance with the register.

2. The method according to claim 1, wherein the register means comprise equidistant perforations in rows parallel to the length of the web.

3. The method according to claim 1 or 2, wherein the electronic components (12, 14) are affixed to the support web (10).

4. The method according to claim 3, wherein the electronic components (12, 14) are bonded to the support web (10).

5. The method according to one of claims 1 to 4, wherein the covering material (16; 28) flows around the electronic components (12, 14).

6. The method according to one of claims 1 to 5, wherein the covering material (16; 24) is a plastic material that is provided in the shape of a web and is laminated onto the support web (10) in accordance with the register.

7. The method according to one of claims 1 to 5, wherein a covering web (24) in accordance with the register having openings (26) in the region of the electronic components (12, 14) is laminated or bonded onto the support web (10) and wherein the cutouts are levelled with a filler material (28).

8. The method according to one of the preceding claims, wherein the covering web (18; 20) is provided with a printing.

9. The method according to one of the preceding claims, wherein the covering web (18; 20) is laminated onto the kern web.

10. The method according to one of the preceding claims, wherein covering webs (18, 20) are laminated onto both sides of the kern web.

11. The method according to one of the preceding claims, wherein the covering material (16; 24) is laminated onto the support web (10) at a first temperature, and wherein the covering web (18; 20) is laminated onto the kern web at a second, similar or different, temperature.

12. The method according to one of the preceding claims, wherein the electronic components lying in the kern web comprise an antenna coil (12).

13. The method according to claim 12, wherein the electronic components comprise a semiconductor chip (14) that is connected to the antenna coil (12).

14. The method according to claim 13, wherein the connection between coil (12) and chip (14) is carried out on the support web (10).

15. The method according to claim 12, wherein, after applying the covering web, an opening to uncover the coil contacts is provided in the card and wherein the coil contacts are connected with a semiconductor module inserted into the opening.

16. The method according to claim 12, as far as dependent upon one of claims 1 to 3, wherein the antenna coil (12) is printed onto the support web (10).

17. The method according to claim 12, as far as dependent upon one of claims 1 to 3, wherein the antenna coil (12) is galvanically applied onto the support web (10).

18. The method according to claim 12, wherein an antenna coil (12) made of coiled wire is applied onto the support web (10).

## Revendications

1. Procédé pour la production de cartes en matière plastique comportant des composants électroniques, comprenant les étapes
équiper une feuille de support (10) sur un premier côté avec au moins une partie des composants électroniques (12, 14) conforme à un registre, et
produire une feuille principale avec composants électroniques inclus, plane des deux côtés dans la région des cartes en matière plastique, par application d'un matériau de recouvrement (16; 24, 28) sur le premier côté de la feuille de support (10),
**caractérisé en ce**
**qu'**une feuille de recouvrement (18; 20) plane est appliquée au moins d'un côté sur la feuille principale produite, et
**que** des moyens d'alignement par registre sont prévus, en dehors de la région des cartes en matière plastique, dans la feuille de support (10) pour l'application conforme au registre d'au moins de la feuille de recouvrement (18; 20).

2. Procédé selon la revendication 1, dans lequel les moyens d'alignement par registre comportent des perforations équidistantes en rangées parallèles à la longueur de la feuille.

3. Procédé selon la revendication 1 ou 2, dans lequel les composants électroniques sont attachés à la feuille de support (10).

4. Procédé selon la revendication 3, dans lequel les composants électroniques (12, 14) sont collés sur la feuille de support (10).

5. Procédé selon l'une des revendications 1 à 4, dans lequel le matériau de recouvrement (16; 28) est coulé autour des composants électroniques (12, 14).

6. Procédé selon l'une des revendications 1 à 5, dans lequel le matériau de recouvrement (16; 24) est une matière plastique qui est appliquée en forme de feuille et qui est laminée sur la feuille de support (10) conforme au registre.

7. Procédé selon l'une des revendications 1 à 5, dans lequel une feuille de recouvrement (24) conforme au registre comportant des ouvertures (26) dans la région des composants électroniques (12, 14) est laminée ou collée sur la feuille de support (10), et dans lequel les découpures sont aplanies par un matériau colmateur (28).

8. Procédé selon l'une des revendications précédentes, dans lequel la feuille de recouvrement (18; 20) comporte une impression.

9. Procédé selon l'une des revendications précédentes, dans lequel la feuille de recouvrement (18; 20) est laminée sur la feuille principale.

10. Procédé selon l'une des revendications précédentes, dans lequel des feuilles de recouvrement (18; 20) sont laminées sur les deux côtés de la feuille principale.

11. Procédé selon l'une des revendications précédentes, dans lequel le matériau de recouvrement (16; 24) est laminé sur la feuille de support à une première température, et dans lequel la feuille de recouvrement (18; 20) est laminée sur la feuille principale à une seconde température, identique ou différente.

12. Procédé selon l'une des revendications précédentes, dans lequel les composants électroniques disposés sur la feuille principale comportent une bobine d'antenne (12).

13. Procédé selon la revendication 12, dans lequel les composants électroniques comportent une puce semi-conductrice (14) reliée à la bobine d'antenne (12).

14. Procédé selon la revendication 13, dans lequel la connexion entre bobine (12) et puce (14) est effectuée sur la feuille de support (10).

15. Procédé selon la revendication 12, dans lequel, après l'application de la feuille de couverture, une brèche est creusée dans la carte pour dégager les contacts de la bobine et dans lequel les contacts de la bobine sont connectés à un module semi-conducteur introduit dans la brèche.

16. Procédé selon la revendication 12, tant que dépendant de l'une des revendications 1 à 3, dans lequel la bobine d'antenne (12) est imprimée sur la feuille de support (10).

17. Procédé selon la revendication 12, tant que dépendant de l'une des revendications 1 à 3, dans lequel la bobine d'antenne (12) est appliquée sur la feuille de support (10) par galvanisation.

18. Procédé selon la revendication 12, dans lequel une bobine d'antenne (12) enroulée à partir d'un fil est appliquée sur la feuille de support (10).
